# EUROPÄISCHE PATENTSCHRIFT

(11) **EP 0 678 735 B1**
(45) Veröffentlichungstag und Bekanntmachung des Hinweises auf die Patenterteilung: **12.07.2000**
(21) Anmeldenummer: 95105686.0
(22) Anmeldetag: 14.04.1995
(51) Int. Cl.: G01F 25/00

(54) **Einrichtung zum Überwachen einer Durchflussmenge einer Flüssigkeit**
Device for monitoring the flow volume of a liquid
Dispositif de surveillance du débit d'un liquide

(30) Priorität: 18.04.1994 CH 115994
(43) Veröffentlichungstag der Anmeldung: 25.10.1995
(73) Patentinhaber: Miteco AG, CH-4800 Zofingen (CH); Cadeo, Angelo, CH-4852 Rothrist (CH)
(72) Erfinder: Cadeo, Angelo, CH-4852 Rothrist (CH)
(74) Vertreter: Blum, Rudolf Emil Ernst

(56) Entgegenhaltungen:
- DE-A- 1 805 605
- FR-A- 2 466 003
- GB-A- 865 882
- US-A- 3 324 707
- US-A- 4 897 797

## Beschreibung

Die Erfindung betrifft eine Einrichtung zum Überwachen einer Durchflussmenge einer Flüssigkeit, mit einem Durchflussmesser in einer Leitung, die zwischen einer Lieferstelle und einer Abgabestelle liegt.

Bei der Durchflussmessung, sei es mit volumetrischen Messgeräten wie auch mit Massendurchflussmessern, entsteht immer das Problem der Zuverlässigkeit des Durchflussmessers, d.h. es stellt sich die Frage, wie sicher kann man sein, dass der vom Durchflussmesser angezeigte und zur Weiterverarbeitung gesendete Wert auch tatsächlich innerhalb eines zulässigen Toleranzbereiches liegt und stimmt.

Die bis jetzt eingesetzten Einrichtungen lösen das Problem nur teilweise, da sie meistens nach dem Durchflussmesser plaziert werden und normalerweise nicht mit der jeweiligen Prozessflüssigkeit kontrolliert werden, sondern mit Wasser. Dazu kommt, dass die Überwachungsoperation oft eine Unterbrechung eines Fertigungsprozesses bedingt, und dass der Durchflussmesser einer Zufallskontrolle durch eine Bedienungsperson und meistens nur am Anfang eines Fertigungsprozesses unterliegt.

In der DE 1 805 605 wird ein Verfahren zur Prüfung der Messgenauigkeit von Durchflussmengenmessern offenbart. Dabei wird von einem Hochbehälter eine genau bestimmte Flüssigkeitsmenge durch den Durchflussmesser geleitet und mit dessen über die Auslaufzeit integrierten Messsignal verglichen. Der Hochbehälter weist in verschiedenen Höhenlagen seitliche Flüssigkeitskontakte zur Bestimmung einer konstanten Flüssigkeitsmenge und zur Schaltung des Flüssigkeitsstroms auf. Diese Eichapparatur verwendet einen geschlossenen Flüssigkeitskreislauf mit langsamer Zuleitung zum Hochbehälter und ist für eine online Überwachung von Durchflussmengenmessern ungeeignet.

Es wird die Schaffung einer Einrichtung bezweckt, mit der die vorerwähnten Nachteile vermieden werden können. Diese Aufgabe wird durch die Merkmale von Anspruch 1 gelöst, wobei die abhängigen Ansprüche 2-6 weitere Ausgestaltungen und Anspruch 7 eine spezifische Verwendung der Einrichtung definieren.

In der Zeichnung ist ein Ausführungsbeispiel des Erfindungsgegenstandes in vier verschiedenen Stellungen schematisch dargestellt. Es zeigen:
Figur 1 die Einrichtung beim Aufbauen einer Flüssigkeitssäule in einem Pufferbehälter der Leitung,
Figur 2 die Einrichtung nach dem Aufbauen der Flüssigkeitssäule und vor dem Beginn eines Messvorganges einer als Konstante vorliegenden Flüssigkeitsmenge,
Figur 3 die Einrichtung beim Beginn der Messung der als Konstante vorliegenden Flüssigkeitsmenge innerhalb des Pufferbehälter, und
Figur 4 das Ende der Messung der als Konstante vorliegenden Flüssigkeitsmenge im Pufferbehälter.

Die Einrichtung hat einen Durchflussmesser 1, eine Pumpe 2, eine Lieferstelle 3 und eine Abgabestelle 4. Die Einrichtung hat weiterhin eine Leitung 5, die einen ersten Leitungsabschnitt 6 und einen zweiten Leitungsabschnitt 7 umfasst. Der erste Leitungsabschnitt 6 erstreckt sich zwischen der Lieferstelle 3 und einem Pufferbehälter 8, und der zweite Leitungsabschnitt 7 erstreckt sich zwischen dem Pufferbehälter 8 und der Abgabestelle 4. Die Leitung 5 ist also in den ersten Leitungsabschnitt 6 und den zweiten Leitungsabschnitt 7 unterteilt. Die Pumpe 2 liefert die Flüssigkeit über die Abgabestelle 4 zur Weiterverarbeitung, wobei die Fördermenge der Pumpe 2 konstant oder veränderlich sein kann.

Der Durchflussmesser 1 ist der Pumpe 2 nachgeschaltet. Der Durchflussmesser 1 misst die durchfliessende Flüssigkeitsmenge und zeigt diese an. Diese Anzeige des Durchflussmessers 1 soll mit der erfindungsgemässen Einrichtung kontrolliert und damit überwacht werden.

Die Lieferstelle 3 umfasst einen Flüssigkeits-Vorratsbehälter 9, der in einem Gestell 10 gehalten wird. Ein Motor 11 treibt einen Rührer 12 an, um die Flüssigkeit ständig umzurühren. Die Leitung 5 ist mit verschiedenen Absperrhähnen versehen, wobei zum Verständnis der erfindungsgemässen Einrichtung nur der Absperrhahn 13 Bedeutung hat.

Im Pufferbehälter 8 befindet sich ein den Flüssigkeitsstrom abstellender Maximum-Niveauschalter 14 und zwei Niveau-Messonden 15 und 16. Der Maximum-Niveauschalter 14 hat eine Taststelle 17. Die Niveau-Messonde 15 hat eine Taststelle 18, und die Niveau-Messonde 16 hat eine Taststelle 19. Diese Taststellen 17,18,19 sprechen auf das jeweilige Niveau der im Pufferbehälter 8 stehenden Flüssigkeitssäule an und geben dies z.B. über elektrische Signale an ein Verarbeitungsgerät 20. Die Taststellen 17, 18 und 19 sind dem Boden 21 des Pufferbehälters 8 zugewandt. Die Taststelle 17 vom Maximum-Niveauschalter 14 liegt höher als die beiden Taststellen 18, 19 der Niveau-Messonden 15 und 16.

Der erste Leitungsabschnitt 6 ist dazu bestimmt, eine grössere Durchflussmenge durchzuleiten als der zweite Leitungsabschnitt 7, so dass also der Pufferbehälter 8 durch die vorerwähnte unterschiedlich Durchflussmenge durch die beiden Leitungsabschnitt 6 und 7 allmählich gefüllt wird. Wie schon erwähnt, hängt die Durchflussmenge des zweiten Leitungsabschnittes 7 von der jeweiligen Förderleistung der Pumpe 2 ab. Die Durchflussmenge durch den ersten Leitungsabschnitt 6 kann z.B. durch das Eigengewicht der Flüssigkeit erfolgen. Es könnte aber auch eine nicht dargestellte Pumpe im Leitungsabschnitt 6 vorhanden sein. In jedem Fall muss aber dafür gesorgt werden, dass die Durchflussmenge im ersten Leitungsabschnitt 6 grösser ist als im zweiten Leitungabschnitt 7, da sonst der Pufferbehälter 8 leer läuft und in einem solchen Fall durch nicht dargestellte Organe die ganze Einrichtung abgestellt würde.

Der vertikale Abstand zwischen den beiden Taststellen 18, 19 der beiden Niveau-Messonden 15, 16 bestimmt eine Flüssigkeitsmenge, die als Konstante vorliegt, die zur Ueberwachung und damit zur Kontrolle des Durchflussmessers verwendet wird. Die Anzeige des Durchflussmessers wird also mit der Konstanten auf Uebereinstimmung verglichen.

Die Arbeitsweise mit der Einrichtung ist folgendermassen:

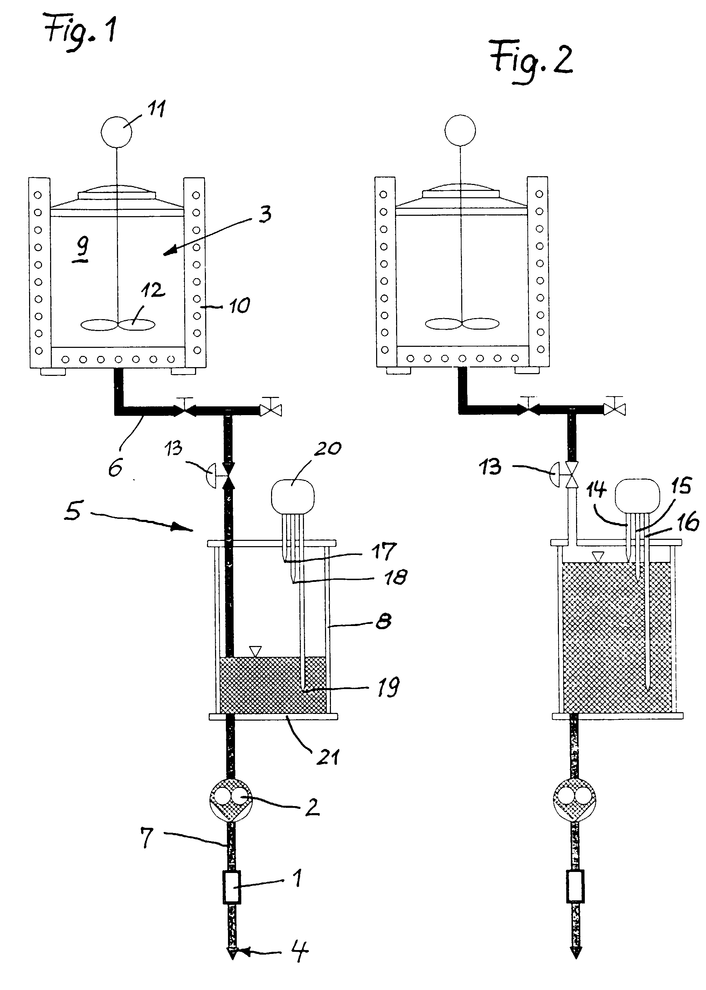

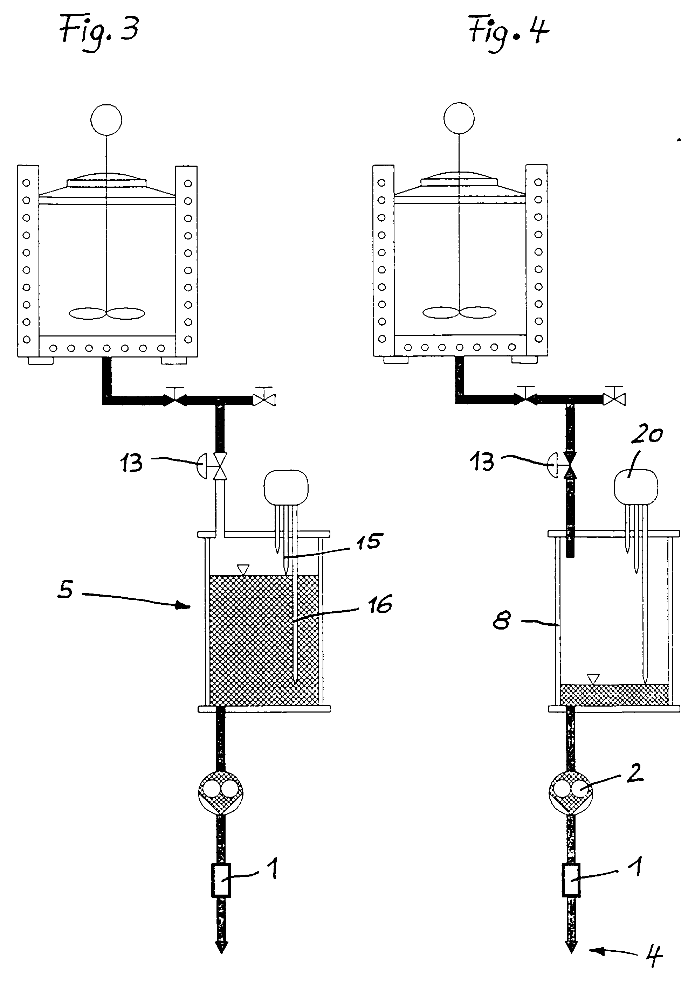

Dem Durchflussmesser 1 wird ein Soll-Wert eingegeber (z.B. 100 L/h). Der Durchflussmesser 1 misst die durchlaufende Flüssigkeitsmenge selbst als Ist-Wert (z.B. 99,8 L/h). Solange die Differenz zwischen Soll-Wert und Ist-Wert innerhalb eines vorbestimmten Toleranzbereiches liegt, arbeitet die in den Figuren 1 bis 4 gezeigte Einrichtung ununterbrochen so, dass eine Flüssigkeit von der Lieferstelle 3 zur Abgabestelle 4 gefördert wird. Wenn der Ist-Wert ausserhalb des vorbestimmten Toleranzbereiches liegt, wird die Einrichtung bzw. eine damit in Verbindung stehende Anlage abgestellt, so dass keine Flüssigkeit mehr von der Lieferstelle 3 zur Abgabestelle 4 gefördert wird. In der vorstehend beschriebenen Weise arbeitet bereits eine bekannte Einrichtung ohne die erfindungsgemässe Ausbildung. Ein Problem tritt nunmehr ein, wenn der Durchflussmesser 1 einen falschen Ist-Wert angibt. Die Förderung einer Flüssigkeit läuft nämlich weiter (man befindet sich innerhalb des erwähnten Toleranzbereiches), aber effektiv tritt ein Fehler ein, nämlich eine falsche Durchflussmenge. Um dies zu vermeiden weist die erfindungsgemässe Einrichtung die Bauteile 8 und 13-21 auf. Da durch den ersten Leitungsabschnitt 6 mehr fliesst als durch den zweiten Leitungsabschnitt 7, wird im Pufferbehälter 8 nach Figur 1 zunehmend eine Flüssigkeitssäule aufgebaut. Die schwarz voll ausgezogenen Linien der Leitung 5 zeigen den Flüssigkeitsfluss von der Lieferstelle 3 zur Abgabestelle 4 an. Nach Figur 1 steigt das Flüssigkeitsniveau im Pufferbehälter 8 bis zur Stellung nach Figur 2, wo das Flüssigkeitsniveau die Taststelle 17 des Maximum-Niveauschalters 14 erreicht hat. Hierdurch wird ein Signal über das Organ 20 zum Absperrhahn 13 gegeben, der hierdurch geschlossen wird. Es fliesst nunmehr keine Flüssigkeit mehr von der Lieferstelle 3 zum Pufferbehälter 8. Das tatsächliche Niveau der Flüssigkeit im Pufferbehälter 8 ist hierbei belanglos; es ist also unwichtig, wie schnell der Hahn 13 geschlossen wird. Für den nachfolgenden Messvorgang ist also das tatsächliche Niveau in Figur 2 nicht massgebend. Infolge des abgesperrten Hahnes 13 sinkt nunmehr das Flüssigkeitsniveau im Pufferbehälter 8 ab. Wenn das Flüssigkeitsniveau die Taststelle 18 der Messonde 15 verlässt, von dieser also nich mehr wahrgenommen wird, beginnt der Messvorgang, der in Figur 3 gezeigt ist. Dieser Messvorgang dauert an, bis das Flüssigkeitsniveau von der Taststelle 19 der Messonde 16 nicht mehr wahrgenommen wird. Das Ende der Messung ist in Figur 4 dargestellt. Der vertikale Abstand zwischen den beiden Taststellen 18 und 19 bestimmt eine Flüssigkeitsmenge im Pufferbehälter 8, die als Konstante vorliegt. Während dieses Messvorgangs, also zwischen den Stellungen nach Figur 3 und 4, ist der vom Durchflussmesser 1 angezeigte Wert festgehalten worden und wird mit der vorgenannten Konstanten verglichen. Nunmehr sieht man, welche Uebereinstimmung mit dem angezeigten Wert des Durchflussmessers 1 und der Konstanten vorhanden ist. Liegt man bei diesem Vergleich innerhalb des eingangs erwähnten Toleranzbereiches, arbeitet der Durchflussmesser korrekt und die Pumpe 2 fördert weiterhin die Flüssigkeit zur Abgabestelle 4, wobei dann über das Organ 20 der Absperrhahn 13 nach Figur 4 wieder geöffnet wird, so dass sich wiederum eine Flüssigkeitssäule im Pufferbehälter 8 aufbaut.

Die Differenz zwischen den Durchflussmengen vom ersten Leitungsabschnitt 6 und zweiten Leitungsabschnitt 7 sowie das Flüssigkeitsvolumen im Pufferbehälter 8 zwischen den beiden Taststellen 18 und 19 ergibt das Intervall des Vorganges, also das Kontrollprogramm für den Durchflussmesser 1. In der Praxis wird man also das Flüssigkeitsvolumen im Pufferbehälter 8 zwischen den beiden Taststellen 18,19 nicht zu gross wählen bei kleiner Zuflussmenge im ersten Leitungsabschnitt 6, damit das Kontrollprogramm für den Durchflussmesser häufig genug durchgeführt werden kann (z.B. 3- oder 30-mal pro Stunde).

Die erfindungsgemässe Einrichtung kann bei einer Mischanlage verwendet werden, bei der mehrere solcher Einrichtungen parallel zueinander vorhanden sind und die Einrichtungen für verschiedene Flüssigkeiten bestimmt sind. Das vorerwähnte Kontrollprogramm für den Durchflussmesser 1 kann dann bei jeder der vorerwähnten Einrichtungen für unterschiedliche Mischungskomponenten angewandt werden, und weiterhin kann das Kontrollprogramm bei den verschiedenen Mischungskomponenten auch mit unterschiedlichen Intervallen erfolgen.

## Patentansprüche

1. Einrichtung zum Überwachen einer Durchflussmenge einer Flüssigkeit, mit einem Durchflussmesser (1) in einer Leitung (5), die zwischen einer Lieferstelle (3) und einer Abgabestelle (4) liegt, wobei in der Leitung (5) ein Pufferbehälter (8) für die Flüssigkeit liegt, so dass die Leitung (5) in einen ersten und einen zweiten Leitungsabschnitt (6,7) unterteilt ist, und der erste Leitungsabschnitt (6) zwischen Lieferstelle (3) und Pufferbehälter (8) liegt und der zweite Leitungsabschnitt (7) zwischen Pufferbehälter (8) und Abgabestelle (4) liegt, wobei im Pufferbehälter (8) ein Maximum-Niveauschalter (14) zum Abstellen des Flüssigkeitsstrom in den Pufferbehälter und zwei mit ihren Taststellen (18, 19) im vertikalen Abstand voneinander liegende Niveau-Messonden (15, 16) vorhanden sind, wobei die Taststelle (17) vom Maximum-Niveauschalter (14) höher liegt als die beiden Taststellen (18, 19) der Niveau-Messonden (15, 16), der vertikale Abstand zwischen den beiden Taststellen (18, 19) der Niveau-Messonden (15, 16) ein konstantes Flüssigkeitsvolumen im Pufferbehälter (8) definiert, eine Absinkzeit eines Flüssigkeitsniveaus zwischen den beiden Taststellen (18, 19) einen Messvorgang definiert und die Vorrichtung für einen Vergleich des während des Messvorgangs integrierten Werts des Durchflussmessers (1) mit dem konstanten Flüssigkeitsvolumen ausgestaltet ist, dadurch gekennzeichnet, dass
zum Füllen des Pufferbehälters (8) der erste und zweite Leitungsabschnitt (6, 7) so ausgebildet sind, dass eine Durchflussmenge im ersten Leitungsabschnitt (6) grösser ist als eine Durchflussmenge im zweiten Leitungsabschnitt (7) .

2. Einrichtung zum Überwachen einer Durchflussmenge einer Flüssigkeit nach Anspruch 1, dadurch gekennzeichnet, dass die Taststellen (17, 18, 19) von Maximum-Niveauschalter (14) und Niveau-Messonden (15, 16) dem Boden (21) des Pufferbehälters (8) zugewandt liegen.

3. Einrichtung zum Überwachen einer Durchflussmenge einer Flüssigkeit nach einem der Ansprüche 1-2, dadurch gekennzeichnet, dass die Einrichtung zur Durchführung des Messvorgangs in Intervallen ausgestaltet ist.

4. Einrichtung zum Überwachen einer Durchflussmenge einer Flüssigkeit nach Anspruch 3, dadurch gekennzeichnet, dass ein Intervall des Messvorgangs durch die Differenz zwischen den Durchflussmengen vom ersten Leistungsabschnitt (6) und zweiten Leitungsabschnitt (7) sowie das Flüssigkeitsvolumen im Pufferbehälter (8) zwischen den beiden Taststellen (18, 19) gegeben ist.

5. Einrichtung zum Überwachen einer Durchflussmenge einer Flüssigkeit nach einem der Ansprüche 1-4, dadurch gekennzeichnet, dass die Durchflussmenge des zweiten Leitungsabschnitts (7) von einer Förderleistung einer Pumpe (2) abhängt.

6. Einrichtung zum Überwachen einer Durchflussmenge einer Flüssigkeit nach einem der Ansprüche 1-5, dadurch gekennzeichnet, dass die Durchflussmenge durch den ersten Leitungsabschnitt (6) von dem Eigengewicht der Flüssigkeit oder von einer Pumpe im Leitungsabschnitt (6) abhängt.

7. Verwendung der Einrichtung nach einem der Ansprüche 1-6 bei einer Mischanlage, bei der mehrere Einrichtungen parallel zueinander vorhanden sind und die Einrichtungen für verschiedene Flüssigkeiten bestimmt sind.

## Claims

1. An apparatus for controlling a flow rate of a liquid, having a flowmeter (1) located in a conduit (5) extending between a delivery site (3) and a discharge site (4), wherein a buffer tank (8) for the liquid is located in the conduit (5) such that the conduit (5) is divided into a first and a second conduit section (6, 7), which first conduit section (6) is located between the delivery site (3) and the buffer tank (8) and which second conduit section (7) is located between the buffer tank (8) and the discharge site (4), wherein in the buffer tank (8) a maximum-level switch (14) for switching the liquid flow into the buffer tank (8) and two level measuring probes (15, 16) are present, which level measuring probes (15, 16) include detector points (18, 19) arranged at a vertical distance from each other, wherein the detector point (17) of the maximum-level switch (14) is located higher than the detector points (18, 19) of the level measuring probes (15, 16), the vertical distance between the detector points (18, 19) of the level measuring probes (15, 16) defines a constant amount of liquid in the buffer tank (8), a sinking time of a liquid level between the detector points (18, 19) defines a measuring process and the apparatus is designed for comparing an indication of the flowmeter (1) integrated over the measuring process with the constant amount of liquid, characterized in that
for filling the buffer tank (8) the first and second conduit sections (6, 7) are designed such that a rate of flow through the first conduit section (6) is larger than a rate of flow through the second conduit section (7).

2. The apparatus for controlling a flow rate of a liquid according to claim 1, characterized in that the detector points (17, 18, 19) of the maximum-level switch (14) and the level measuring probes (15, 16) are facing the bottom (21) of the buffer tank (8).

3. The apparatus for controlling a flow rate of a liquid according to one of the claims 1-2, characterized in that the apparatus is designed for performing the measuring process in intervals.

4. The apparatus for controlling a flow rate of a liquid according to claim 3, characterized in that an interval of the measuring process is given by the difference between the amounts of liquid flowing through the first conduit section (6) and the second conduit section (7) together with the amount of liquid in the buffer tank (8) between the detector points (18, 19).

5. The apparatus for controlling a flow rate of a liquid according to one of the claims 1-4, characterized in that the flow rate of the second conduit section (7) depends on a capacity of a pump (2).

6. The apparatus for controlling a flow rate of a liquid according to one of the claims 1-5, characterized in that the flow rate through the first conduit section (6) depends on the weight of gravity of the liquid or on a pump in the conduit section (6).

7. An application of the apparatus according to one of the claims 1-6 in a mixing plant which includes a plurality of such apparatus in parallel to each other and wherein the apparatus are intended for different liquids.

## Revendications

1. Dispositif de surveillance du débit d'un liquide comprenant un débitmètre (1) dans un conduit (5) qui se trouve entre un point d'alimentation (3) et un point de décharge (4), un conteneur tampon (8) pour le liquide se trouvant dans le conduit (5) de sorte que le conduit (5) est divisé en une première et une deuxième section (6, 7) de conduit et que la première section de conduit (6) se trouve entre le point d'alimentation (3) et le conteneur tampon (8) et la deuxième section de conduit (7) se trouve entre le conteneur tampon (8) et le point de décharge (4), un interrupteur (14) de niveau maximal destiné à interrompre l'écoulement du liquide dans le conteneur tampon (8) et deux sondes (15, 16) de mesure de niveau dont les capteurs (18, 19) présentent un écart vertical l'un par rapport à l'autre se trouvant dans le conteneur tampon (8), le capteur (17) de l'interrupteur (14) de niveau maximal se trouvant plus haut que les deux capteurs (18, 19) des sondes (15, 16) de mesure de niveau, l'écart vertical entre les deux capteurs (18, 19) des sondes (15, 16) de mesure de niveau définissant un volume de liquide constant dans le conteneur tampon (8), un temps d'abaissement du niveau du liquide entre les deux capteurs (18, 19) définissant un processus de mesure et l'instrument étant agencé pour comparer la valeur intégrée du débitmètre (1) pendant le processus de mesure avec le volume constant de liquide, **caractérisé en ce que** pour remplir le conteneur tampon (8), la première et la deuxième section (6, 7) de conduit sont agencées de telle manière que le débit dans la première section (6) de conduit est plus grand que le débit dans la deuxième section (7) de conduit.

2. Dispositif de surveillance du débit d'un liquide selon la revendication 1, caractérisé en ce que les capteurs (17, 18, 19) de l'interrupteur (14) de niveau maximal et des sondes (15, 16) de mesure de niveau sont orientés vers le fond (21) du conteneur tampon (8).

3. Dispositif de surveillance du débit d'un liquide selon une des revendications 1 - 2, caractérisé en ce que le dispositif est agencé pour exécuter le processus de mesure à intervalles.

4. Dispositif de surveillance du débit d'un liquide selon la revendication 3, caractérisé en ce qu'un intervalle du processus de mesure est donné par la différence entre les débits dans la première section (6) de conduit et la deuxième section (7) de conduit ainsi que par le volume de liquide dans le conteneur tampon (8) entre les deux capteurs (18, 19).

5. Dispositif de surveillance du débit d'un liquide selon une des revendications 1 - 4, caractérisé en ce que le débit de la deuxième section (7) de conduit dépend de la capacité de refoulement d'une pompe (2).

6. Dispositif de surveillance du débit d'un liquide selon une des revendications 1 - 5, caractérisé en ce que le débit dans la première section (6) de conduit dépend du poids propre du liquide ou d'une pompe dans la section (6) de conduit.

7. Utilisation du dispositif selon une des revendications 1 - 6 dans une installation de mélange dans laquelle plusieurs dispositifs sont placés en parallèle et les dispositifs sont destinés à différents liquides.
